# EUROPEAN PATENT APPLICATION

(11) **EP 4 456 162 A1**
(43) Date of publication of application: **30.10.2024**
(21) Application number: 24171671.1
(22) Date of filing: 22.04.2024
(51) Int. Cl.: H01M 4/04, H01M 4/134, H01M 4/1395, H01M 4/36, H01M 4/38, H01M 4/62, H01M 10/0525, H01M 4/02

(54) **NEGATIVE ACTIVE MATERIAL AND RECHARGEABLE LITHIUM BATTERY INCLUDING SAME**

(30) Priority: 27.04.2023 KR 20230055736
(71) Applicant: Samsung SDI Co., Ltd., Yongin-si, Gyeonggi-do 17084 (KR)
(72) Inventor: SHIN, Changsu, 17084 Yongin-si (KR); KIM, Youngugk, 17084 Yongin-si (KR); WON, Jongmin, 17084 Yongin-si (KR); PARK, Sunil, 17084 Yongin-si (KR); NAH, Jaehou, 17084 Yongin-si (KR); KIM, Young-Min, 17084 Yongin-si (KR); KANG, Eunji, 17084 Yongin-si (KR)
(74) Representative: Marks & Clerk LLP

(57) **Abstract**

A negative active material, including an inorganic supporter having pores which are filled with silicon, the silicon located on a surface of the inorganic supporter, and a carbon coating layer on the surface of the inorganic supporter and a surface of the silicon located on the surface of the inorganic supporter.

## Description

### BACKGROUND

### 1. Field

Embodiments relate to a negative active material and a rechargeable lithium battery including the same.

### 2. Description of the Related Art

Recently, the rapid development of electronic devices such as mobile phones, laptop computers, and electric vehicles using batteries has resulted in surprising increases in demand for rechargeable batteries with relatively high capacity and lighter weight. For example, a rechargeable lithium battery has recently drawn attention as a driving power source for portable devices, as it has lighter weight and higher energy density. Accordingly, research for improving performance of rechargeable lithium batteries is actively being conducted.

### SUMMARY

Embodiments are directed to a negative active material, including an inorganic supporter in which pores are filled with silicon, silicon located on a surface of the inorganic supporter, and a carbon coating layer coated on the surface of the inorganic supporter and a surface of the silicon located on the surface of the inorganic supporter.

In embodiments, the inorganic supporter may include Al₂O₃, ZrO₂, SiO₂, TiO₂, SiC, or a combination thereof.

In embodiments, the carbon coating layer may include amorphous carbon, crystalline carbon, or a combination thereof.

In embodiments, the carbon coating layer may include amorphous carbon.

In embodiments, an interior wall of each of the pores may be coated with a carbon-based material.

In embodiments, the carbon-based material may include crystalline carbon, amorphous carbon, or a combination thereof.

In embodiments, the silicon may have a full width at half maximum (FWHM) of about 0.5° to about 10°.

In embodiments, the silicon may have a particle diameter of about 5 nm to about 100 nm.

In embodiments, an amount of the carbon coating layer may be about 1 wt% to about 30 wt% based on a total weight of the negative active material.

In embodiments, a total amount of the silicon may be about 20 wt% to about 70 wt% based on a total weight of the negative active material.

In embodiments, an amount of the inorganic supporter may be about 5 wt% to about 70 wt% based on a total weight of the negative active material.

In embodiments, the carbon coating layer may have a thickness of about 1 nm to about 50 nm.

In embodiments, each of the pores in the inorganic supporter may have a diameter of about 1 nm to about 100 nm.

In embodiments, each of the pores may have a wall thickness of about 5 nm to about 150 nm.

In embodiments, the inorganic supporter in which the pores are filled with silicon may have a porosity of about 10% to about 90%.

In embodiments, the inorganic supporter may have a pore volume of about 0.3 cm³/g to about 4.5 cm³/g.

Embodiments are directed to a rechargeable lithium battery, including a negative electrode including the negative active material, a positive electrode, and an electrolyte.

At least some of the above and other features of the invention are set out in the claims.

### BRIEF DESCRIPTION OF THE DRAWINGS

Features will become apparent to those of skill in the art by describing in detail embodiments with reference to the attached drawings in which:
FIG. 1 is a schematic diagram of the inorganic supporter included in the negative active material according to some embodiments;
FIG. 2 is a schematic diagram of the structure of the negative active material according to one embodiment;
FIG. 3 is a schematic diagram of the structure of the negative active material according to another embodiment; and
FIG. 4 is a schematic perspective view of a rechargeable lithium battery according to another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art. As used herein, the term "or" is not an exclusive term, e.g., "A or B" would include A, B, or A and B

In the present disclosure, when a definition is not otherwise provided, a particle diameter indicates an average particle diameter or size (D50) where a cumulative volume is about 50 volume% in a particle size distribution. The average particle size (D50) may be measured by a method well known to those skilled in the art, for example, by a particle size analyzer, or by a transmission electron microscopic image, or a scanning electron microscopic image. Alternatively, a dynamic light-scattering measurement device may be used to perform a data analysis, and the number of particles is counted for each particle size range, and from this, the average particle diameter (D50) value may be easily obtained through a calculation.

In one or more embodiments, the thickness may be measured by a SEM image or a TEM image, but it is limited thereto, and thus, it may be measured by any techniques as long as the thickness is measured. The thickness may be an average thickness.

A negative active material according to one or more embodiments includes an inorganic supporter in which pores are filled with silicon; silicon is located on a surface of the inorganic supporter; and a carbon coating layer is coated on a surface of the inorganic supporter and a surface of the silicon located on the surface of the supporter.

In the negative active material of one or more embodiments, silicon is located in the pores of a porous inorganic supporter and thus, the inorganic supporter of the final negative active material may have substantially no pores of which the inside of is empty. Because silicon may fill in the pores, the negative active material may include a small particle diameter silicon, e.g., nano-sized silicon. The porous inorganic supporter may prevent the oxidation of silicon so that the nano silicon may be maintained without generation of silicon oxide.

The negative active material may include such a size, a small particle diameter, e.g., nano-sized silicon, so that the volume expansion may be suppressed during charging and discharging, and thus, the cycle-life characteristics may be improved, and capacity may be increased.

Such a silicon may be a particle-type, or may be an elemental silicon (elemental Si). A particle diameter of silicon, e.g., a particle diameter of the silicon filled in the pore or located on a surface of the inorganic supporter may be about 5 nm to about 100 nm, about 10 nm to about 60 nm, about 10 nm to about 50 nm, about 10 nm to about 30 nm, or about 10 nm to about 20 nm.

In one or more embodiments, the pore of the porous inorganic supporter in which pores are formed may be substantially and completely filled with silicon, e.g., the pores may be completely loaded with silicon, and thus, it may be referred to as an inorganic supporter in the final negative active material. The pores substantially completely filled with silicon may indicate that there may be almost no empty spaces in the pores.

The inorganic supporter may be, e.g., Al₂O₃, ZrO₂, SiO₂, TiO₂, SiC, or a combination thereof. Inclusion of Al₂O₃, ZrO₂, SiO₂, TiO₂, SiC, or a combination thereof in the inorganic supporter may help render the negative active material to have the excellent electrochemical stability, thereby reducing initial irreversible capacity and exhibiting much long cycle-life.

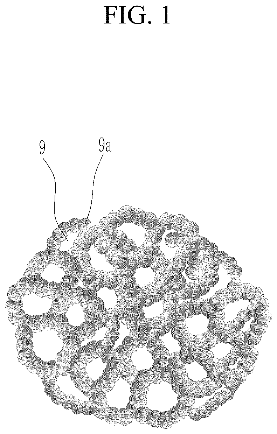

In one or more embodiments, the inorganic supporter may be formed by connecting inorganic material particles, and as shown in FIG. 1, such inorganic material particles may be connected to form a plurality of pores 9. A pore wall 9a defined by the plurality of pores 9 may be included.

An amount of the inorganic supporter may be about 5 wt% to about 70 wt%, about 10 wt% to about 70 wt%, or about 15 wt% to about 70 wt% based on a total weight of the negative active material.

In one or more embodiments, silicon is located on a surface of the inorganic supporter.

In an implementation, silicon may be located inside of the pore, or on a surface of the inorganic supporter.

An amount of the silicon may be about 20 wt% to about 70 wt%, or about 30 wt% to about 60 wt% based on the total weight of the negative active material. If the amount of the silicon included in the negative active material falls within these ranges, much higher capacity and efficiency may be exhibited and further improved cycle-life may be realized. In one or more embodiments, the amount of silicon may mean the total amount, e.g., calculated by summing the amount of silicon located inside of the pores and the surface of the supporter negative active material. If silicon is only located inside of the pores, it may only indicate an amount of silicon located inside of the pores.

In some embodiments, regardless of the position of silicon included in the negative active material, only the total amount of silicon may be important and the amount of silicon located within the pores and on the surface of the supporter may not be significant.

In one or more embodiment, the silicon located inside of the pore may include amorphous or some crystalline silicon. Silicon may have a full width at half maximum (FWHM) of about 0.5 degrees (°) to about 10 degrees (°), or about 1.5 degrees (°) to about 8 degrees (°). The full width at half maximum may be measured by an X-ray diffraction using a CuKα ray and may be a full width at half maximum of a (002) plane of silicon. If the full width at half maximum of silicon is within these ranges, long cycle-life and low expansion may be exhibited.

The carbon coating layer may include a carbon-based material, and the carbon-based material may include amorphous carbon, crystalline carbon, or a combination thereof, and according to one or more embodiments, may be amorphous carbon. If the carbon-based material included in the carbon coating layer is amorphous carbon, the lithium ion transportation speed may be faster, so that lithium ion connection passage may be formed well, enhancing electrical conductivity to facilitate electron movement, and further reducing resistance.

The amorphous carbon may have a full width at half maximum (FWHM) of about 5 degrees (°) or less, or full width at half maximum of about 0.5 degrees (°) to about 5 degrees (°). The full width at half maximum may be measured by an X-ray diffraction by using a CuKα ray and may be the full width at half maximum of a (111) plane of the amorphous carbon. If the carbon-based material included in the carbon coating layer has the ranged full width at half maximum, even better rate capability and higher electrical conductivity may be obtained.

The X-ray diffraction analysis may be measured under a condition of a scan speed (°/s) of about 0.04 to about 0.06, a step size (°/step) of about 0.01 to about 0.03 in a range of 2θ= 10° to 80°, and optionally, time per step of about 62.475s.

The amorphous carbon may be pitch carbon, soft carbon, hard carbon, mesophase pitch carbide, sintered cokes, carbon fiber, or a combination thereof, and the crystalline carbon may be artificial graphite, natural graphite, or a combination thereof.

The thickness of the carbon coating layer formed on the surface of the porous inorganic supporter may be about 1 nm to about 50 nm, or about 1 nm to about 20 nm. If the thickness of the carbon coating layer is within these ranges, excellent capacity and efficiency may be realized while a more uniform electrical conductivity may be exhibited.

In one or more embodiments, an interior wall of the pores of the porous inorganic supporter may be coated with a carbon-based material. The coating of the carbon-based material on the interior wall of the pores may indicate that the carbon-based material is located between silicon filled in the pores and the internal wall of the pores. If the internal wall of the pores is coated with the carbon-based material, the ion conductivity may be further improved. The carbon-based material coated on the interior wall of the pores may be crystalline carbon, amorphous carbon, or a combination thereof, and according to one or more embodiments, may be amorphous carbon.

The thickness of the carbon-based material coated on the pore interior wall may be about 1 nm to about 50 nm, or about 5 nm to about 20 nm. If the thickness is within these ranges, excellent electrical conductivity and ionic conductivity may be exhibited.

An amount of the carbon-based material included in the negative active material may be about 1 wt% to about 30 wt%, about 5 wt% to about 20 wt%, or about 10 wt% to about 20 wt% based on a total weight of the negative active material. If the amount of the carbon-based material included in the negative active material is within these ranges, a more uniform coating layer may be formed, thereby further improving electrical conductivity. The amount of the carbon-based material included in the negative active material may indicate the total amount, e.g., calculated by summing the amount of the carbon-based material in the carbon coating layer located to cover the surface of the porous inorganic supporter, and the amount of the carbon-based material coated on the pore interior wall. If the pore interior wall is not coated with the carbon-based material, it may simply indicate only the amount of the carbon-based material in the carbon-coating layer.

In one or more embodiments, regardless of the positions of the carbon-based material included in the negative active material, only the total amount of the carbon-based material may be critical, and the amount of each of the carbon-based materials coated on the coating layer and the pore interior wall may not critical.

In one or more embodiments, the inorganic supporter may have pores formed therein, and silicon may be filled in the pores. A diameter of pores in the inorganic supporter which is not filled with silicon (e.g. diameter of pores before they are filled with silicon), e.g., may be about 1 nm to about 100 nm, or about 1 nm to about 50 nm. The diameter of pores may be an average diameter of pores. A porosity may be about 10% to about 90%, or about 30% to about 80%. A volume of the pores formed in the porous inorganic supporter may be, e.g., about 0.3 cm³/g to about 4.5 cm³/g, about 0.5 cm³/g to about 4.0 cm³/g or about 2.0 cm³/g to about 4.0 cm³/g. In the porous inorganic supporter, the thickness of the pore wall may be about 5 nm to about 150 nm. If the thickness of the pore wall is within the range, the pore size and the porosity may be more suitably adjusted.

In some embodiments, the diameter of the pores, the porosity, and the volume of the pores may be measured by using a Barrett-Joyner-Halenda (BJH) through an N₂ absorption isotherm. For example, the inorganic supporter is pre-treated by increasing a temperature to about 523 K at a rate of about 10 K/min and maintaining it for 2 hours to 10 hours under a vacuum of about 100 mmHg or less, and is used to measure the diameter of the pores, the porosity, and the volume of the pores. In the liquid nitrogen of which a relative pressure (P/P₀) is adjusted to about 0.1 torr or less, the nitrogen is adsorbed into the inorganic supporter at the relative pressure from 0.01 torr to 0.995 torr at about 32 points, and the nitrogen is desorbed to the relative pressure of about 0.14 torr at about 24 points. From the absorbed N₂ amount, the pore volume may be determined. From the pressure at which excess N₂ is adsorbed, the diameter of the pores may be obtained. The absorbed N₂ amount relative to the volume of the inorganic supporter may be calculated as the porosity.

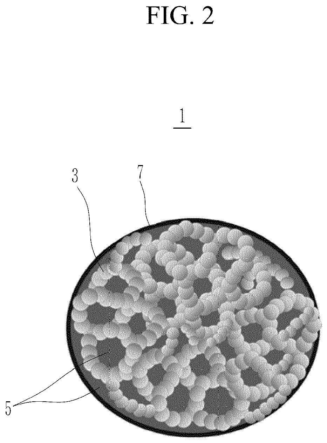

FIG. 2 is schematic diagram of the structure of the negative active material according to one or more embodiments. As shown in FIG. 2, the negative active material 1 may include an inorganic supporter 3 formed by pores, silicon 5 may be in the pores, and may be located on a surface of the inorganic supporter 3, and a carbon coating layer 7 may be coated on a surface of the porous inorganic supporter 3. In FIG. 2, silicon on the surface of the inorganic supporter is shown in the form of a layer where silicon is continuously positioned but may be in the form of an island which is discontinuous.

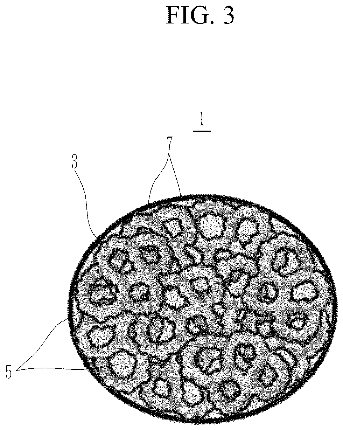

FIG. 3 is a schematic diagram of the negative active material according to another embodiment, where the pore internal wall may be coated with amorphous carbon 7 and the amorphous carbon coating layer may be between the pore interior wall and inside of the pores.

A negative active material according to one or more embodiments may be prepared by the following procedures.

First of all, a porous inorganic supporter may be prepared. The porous inorganic supporter may be prepared by an aerogel procedure or a spray-drying procedure, and hereinafter, each procedure will be illustrated.

In the aerogel procedure, a water glass including SiO₂ may be diluted with water to prepare a water glass solution including SiO₂. The water glass may further include Na₂O, K₂O, and Fe₂O₃ in addition to SiO₂. In the water glass, an amount of SiO₂ may be about 20 wt% to about 40 wt% based on the total weight of the water glass, and in the diluted SiO₂-including water glass solution, an amount of SiO₂ may be about 3 wt% to about 6 wt% based on the total weight of the diluted SiO₂-including water glass solution. If the amount of SiO₂ included in the water glass is within the range, the inside pores may be freely controlled.

In one or more embodiments, among the components included in the water glass, the amount of the components other than the amount of SiO₂ may be suitably adjusted.

The water glass solution may be mixed with an acid solution to prepare a silica sol. Through mixing with the acid solution, a sodium component included in the water glass solution may be removed. If the mixing of the water glass solution with the acid solution is not performed, e.g., a neutralization with the solution of the acid is not performed, the strong alkali water glass may not prepare a silica sol, thereby preparing no objective negative active material. In an implementation, it is difficult to prepare a porous supporter having sufficient pores and thus, it is difficult to fill silicon in the pores of the porous supporter at a sufficient amount.

The solution of the acid may be a solution including an acid such as hydrochloric acid, nitric acid, sulfuric acid, acetic acid, fluoric acid, or a combination thereof, and include water as a solvent. The solution of the acid may have a concentration of about 0.2 M to about 3 M.

A mixing ratio of the water glass solution and the solution of the acid may be about 8:2 to about 6:2 by a volume ratio, or about 6:1 to about 6:0.5 by a volume ratio.

Thereafter, an alcohol may be added to the silica sol and agitate to gel, thereby obtaining a wet gel. The alcohol may be used in an amount corresponding to about 40% to about 60% based on the total volume of the silica sol. If the used amount of the alcohol is within the range, more uniform gelation may be induced. A washing of the wet gel may be further performed.

The wet gel may be modified into a hydrophobic surface by using a non-polar organic solvent and an organic silane compound. The modification may be performed by mixing the wet gel with the non-polar organic solvent and the organic silane compound. The mixing may be performed for 2 hours to 4 hours. According to the mixing, a solvent substitution reaction may occur, and the surface of the gel may be modified to be hydrophobic.

Before mixing, washing the wet gel after separately collecting may be further performed.

The non-polar organic solvent may be a solvent capable of modifying a surface of a target material into a hydrophobic surface. The solvent may be, e.g., isopropyl alcohol, n-hexane, n-heptane, xylene, trimethylchlorosilane, cyclohexane, or a combination thereof.

The organic silane compound may include, e.g., trimethylchlorosilane, hexamethyldisilazane, methyltrimethoxysilane, trimethylethoxysilane, ethyltriethoxysilane, phenyltriethoxysilane, or a combination thereof.

In the mixing, a mixing ratio of the wet gel, the non-polar organic solvent, and the organic silane compound may be about 1:1:1 to about 1:1:0.5 by a volume ratio or about 1:0.5:0.5 by a volume ratio to about 1:0.5:0.25 by a volume ratio.

Thereafter, the prepared surface modified gel may be dried to prepare a porous inorganic supporter. The drying may be performed at about 50 °C to about 180 °C, or about 70 °C to about 160 °C. The drying may be performed for 1 hour to 5 hours or about 1 hour to about 3 hours.

In another embodiment, the drying may be performed by 2 steps of a low temperature drying and a high temperature drying. The low temperature drying may be performed at about 50 °C to about 80 °C for about 1 hour to about 2 hours and the high temperature drying may be performed at about 140 °C to about 170 °C for about 1 hour to about 3 hours. The drying may be performed under atmospheric pressure.

The spray-drying procedure according to another embodiment may be performed by mixing a M-contained oxide, where M may be Al, Zr, Si, Ti, or a combination thereof, a solvent, and an additive to prepare an oxide liquid, spray-drying the oxide liquid to prepare a porous oxide cluster and heat-treating.

The M-containing oxide may be an oxide including the M, and, e.g., may be Al₂O₃, ZrO₂, SiO₂, TiO₂, or a combination thereof, and SiO₂ may be fumed SiO₂.

The oxide may have an average particle diameter of about 5 nm to about 100 nm, about 5 nm to about 50 nm, or about 30 nm to about 50 nm. The solvent may be water, an organic solvent, or a mixture thereof. The organic solvent may be ethanol, isopropyl alcohol, butanol, or a combination thereof. If the mixture of the organic solvent with water is used, the mixing ratio may be suitably adjusted, but, e.g., may be about 1:1 to 1:0.5 by a volume ratio.

The additive may be, e.g., fatty acid, polysaccharide, polyvinyl pyrrolidone, polyethylene glycol, carboxymethyl cellulose, or a combination thereof, the fatty acid may be palmitic acid, stearic acid, or a combination thereof, and the polysaccharide may be sucrose, glucose, fructose, or a combination thereof.

A mixing ratio of the oxide and the additive may be about 95:5 by weight ratio to about 60:40 by a weight ratio. A mixing ratio of the mixture (oxide + the additive) and the solvent may be about 5:95 to about 30:80 by weight ratio or about 10:90 to about 20:80 by weight ratio.

The spray-drying may be performed at about 150 °C to about 200 °C.

The oxide cluster may have a particle diameter of about 5 µm to about 30 µm, or about 5 µm to about 15 µm, and may have a specific surface area of about 50 m²/g to about 200 m²/g, or about 50 m²g to about 150 m²/g. The specific surface area may be a BET specific surface area. The specific surface area may be maintained after heat treatment.

The heat-treatment may be performed at about 500 °C to about 1200 °C, or about 600 °C to about 1000 °C. The heat-treatment may be performed for about 1 hour to about 5 hours, or about 1 hour to about 3 hours.

The heat-treatment may be performed under a nitrogen atmosphere or an inert atmosphere, and the inert atmosphere may be an atmosphere of Ar, helium, or a combination thereof.

By the above process, a porous inorganic supporter may be prepared, and the prepared pores may have diameters of about 1 nm to about 100 nm, or about 1 nm to about 50 nm. A porosity may be about 10% to about 90%, or about 30% to about 90%. A pore volume formed in the porous inorganic supporter may be about 0.4 cm³/g to about 3 cm³/g, about 0.4 cm³/g to about 2 cm³/g, or about 0.4 cm³/g to about 1 cm³/g. If the diameter of the pores satisfies the range, the silicon size may be further suitably controlled and then the cycle-life may be further improved. If the porosity and the pore volume are within the ranges, the silicon filling rate may be suitably controlled to obtain at much higher capacity.

In the porous inorganic supporter, a thickness of the pore wall may be about 5 nm to about 150 nm. If the thickness of the pore wall is within the range, the pore size and the porosity may be further effectively controlled.

The prepared porous inorganic supporter may be vapor deposited with a silicon raw material. The vapor deposition may be a chemical vapor deposition (CVD). The silicon raw material may be, e.g., a SiH₄ gas, a Si₂H₆ gas, a SisHs gas, a SiCl₄ gas, or a combination thereof.

The vapor deposition may be performed at a temperature at which silicon to be deposited may be converted into amorphous Si, a-Si, and, e.g., about 400 °C to about 700 °C. If the vapor deposition is performed at a temperature of more than about 700 °C, silicon to be deposited may be crystallized, thereby increasing the volume expansion during charge and discharge and deteriorating the cycle-life characteristics which is inappropriate. If it is performed at a temperature of less than about 400 °C, the silicon raw material may not be readily decomposed, meaning that the silicon raw material remains acting as impurities in the porous supporter, which is inappropriate.

In the vapor deposition, the gas flow rate which may be a silicon raw material may be about 0.1 L/min to about 1 L/min, or about 0.3 L/min to about 0.6 L/min. By the process, silicon may be filled in the pore of the porous inorganic supporter.

The deposition may be performed for about 0.5 hours to about 5 hours, or about 0.5 hours to 3 hours.

The deposition time of Si and flow rate may be adjusted according to the porosity of the porous inorganic supporter so that the pores may be substantially completely filed with silicon. The substantially complete filling may indicate that the volume of pores inside the porous inorganic supporter may be about 0.05 cm³/g or less. In this process, the deposition time of Si, deposition temperature, and flow rate may be adjusted, so that some silicon may be on the surface of the inorganic supporter. In an implementation, if the process using 0.5 L/min of a gas flow rate is carried out at 400 °C for 1 hour, the pores may be substantially completely filled with silicon.

If the silicon raw material is deposited at the flow rate, the amount of the silicon raw material used may be adjusted in order to achieve a weight ratio of about 30:70 to about 70:30 of the porous inorganic supporter and silicon. If the weight ratio of the inorganic supporter and silicon is within the range, the expansion during charging and discharging may be further effectively suppressed and the more improved cycle-life characteristics may be exhibited.

The resulting product may be coated with carbon. Coating with the carbon may be performed under a vapor procedure by using a carbon precursor, or under a liquid procedure, or a solid procedure.

The vapor procedure may be performed by a vapor deposition using a carbon gas as a carbon precursor. The carbon gas may be, e.g., a C₂H₂ gas, a CH₄ gas, a C₂H₄ gas, or a combination thereof.

The vapor deposition may be performed by a chemical vapor deposition (CVD). The chemical vapor deposition may be thermal chemical vapor deposition, plasma-enhanced chemical vapor deposition, or low pressure chemical vapor deposition. In the vapor deposition, a flow rate of the carbon gas may be about 0.3 L/min to about 1 L/min or about 0.4 L/min to about 0.6 L/min. The vapor deposition may be performed at about 700 °C to about 1000 °C or about 800 °C to about 900 °C.

The used amount of the carbon gas may be suitably adjusted to achieve amounts of the porous inorganic supporter, Si, and the amorphous carbon to be about 5 wt% to about 50 wt%, about 20 wt% to about 70 wt%, and about 1 wt% to 30 wt%, respectively based on a total weight of the negative active material. If the amounts of the porous inorganic supporter, Si, and the amorphous carbon are within the range, the volume expansion during charge and discharge may be further effectively suppressed, and the significantly improved cycle-life characteristics may be exhibited.

The liquid procedure may be performed by using a solid carbon precursor, and may be performed by immersing the resulting material in a carbon precursor liquid prepared by adding the carbon precursor to a solvent, and heat-treating. The carbon precursor may be an amorphous carbon precursor or a crystalline carbon precursor.

The amorphous carbon precursor may include, e.g., coal pitch, petroleum pitch, petroleum-based coke, coal-based cokes, polyvinylchloride, mesophase pitch, tar, low molecular weight heavy oil, polyvinyl alcohol resin, furfuryl alcohol resin, triton, citric acid, stearic acid, sucrose, polyvinylidene fluoride, carboxymethyl cellulose, hydroxypropyl cellulose, regenerated cellulose, polyvinyl pyrrolidone, polyethylene, polypropylene, ethylene-propylene-diene monomer (EPDM), polyacrylic acid, sodium polyacrylate, polyacrylonitrile, glucose, gelatin, saccharide, a phenol resin, a naphthalene resin, a polyamide resin, a furan resin, a polyimide resin, a cellulose resin, a styrene resin, an epoxy resin, a vinyl chloride resin, or a combination thereof.

The crystalline carbon precursor may include, e.g., petroleum-based cokes, coal-based cokes, mesophase microbead, or a combination thereof.

The heat treatment may be carried out at about 700 °C to about 1200 °C.

According to this carbon coating, a carbon coating layer may be formed on the surface of the resulting product, e.g., the porous inorganic supporter whose inside of the pores may be filled with silicon. Because the inside pores of the porous inorganic supporter may be filled with silicon, carbon may not be inserted into inside pores in the carbon coating and may be on the surface of the porous inorganic supporter, thereby forming a coating layer.

A used amount of the carbon precursor may be adjusted in order to have a weight ratio of the inorganic supporter:the silicon:carbon to be about 35:60:5 to about 65:30:5, about 27.5:67.5:5.5 to about 67.5:27.5:5, or about 38:57:5 to about 66.5:28.5:5 in the final product.

If the negative active material has a carbon coating layer inside pores, a vapor deposition with carbon precursor may be further performed before vapor depositing the silicon source material. In an implementation, a carbon precursor vapor deposition may be carried out on the porous supporter, a silicon raw material may be vapor deposited, and then a carbon precursor coating may be carried out.

In the porous supporter with the carbon coating layer, a supporter having pores with a diameter of about 1 nm to about 100 nm, which may be prepared by adjusting conditions such as an addition of an amount of an acid solution, a flow rate, and the like in the porous supporter preparation according to one or more embodiments, may be used. The volume of the pore formed in the porous inorganic supporter may be about 0.3 cm³/g to about 4.5 cm³/g, about 0.5 cm³/g to about 4.0 cm³/g, or about 1 cm³/g to about 3.5 cm³/g. If the pore volume is within the range, Si may be sufficiently accommodated inside pores.

In this way, the porous supporter with large pores may have a larger pore diameter so as to sufficiently accommodate carbon and silicon, because the pore interior wall may be coated with carbon, e.g., because carbon and silicon may both be present inside pores.

The carbon precursor vapor deposition may be performed under the aforementioned carbon vapor deposition condition. However, a mixing ratio of the porous supporter and the carbon precursor may be a weight ratio of about 90:10 to about 97:3, or a weight ratio of about 90:10 to about 95:5.

The silicon deposition and the carbon coating may be performed in the same manner as described above.

In the silicon deposition, the used amount of the silicon raw material or, in the carbon coating, the used amount of the carbon precursor may be adjusted in order to have a weight ratio of the porous inorganic supporter:the silicon:carbon to be about 30:65:5 to about 65:30:5, about 30:60: 10 to about 60:30:10, or about 25:60: 15 to about 55:30:15 in the final product.

A rechargeable lithium battery according to some embodiments may include a negative electrode, a positive electrode, and an electrolyte.

The negative electrode may include a negative active material layer including the negative active material according to one embodiment, a binder, and optionally a conductive material, and a current collector supporting the negative active material layer.

In the negative active material layer, the amount of the negative active material may be about 95 wt% to about 99 wt% based on the total weight of the negative active material layer.

An amount of the binder may be about 1 wt% to about 5 wt% based on the total weight of the negative active material layer.

If the conductive material is further included, an amount of the negative active material may be about 90 wt% to about 98 wt% based on the total weight of the negative active material layer and amounts of the binder and the conductive material may be about 1 wt% to about 5 wt%, respectively, based on the total weight of the negative active material layer.

The binder may improve binding properties of negative active material particles with one another and with a current collector. The binder may be a non-aqueous binder, an aqueous binder, or a combination thereof.

The non-aqueous binder may be, e.g., an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or combinations thereof.

The aqueous binder may be, e.g., a styrene-butadiene rubber, an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenol resin, an epoxy resin, polyvinyl alcohol, or a combination thereof.

If the aqueous binder is used as a negative electrode binder, a cellulose-based compound may be further used to provide viscosity. The cellulose-based compound may include, e.g., carboxymethyl cellulose, hydroxypropylmethyl cellulose, methyl cellulose, or alkali metal salts thereof. The alkali metal may be Na, K, or Li. The cellulose-based compound may act as a binder, and thus, it may not be necessary to limit an amount thereof. In an implementation, the cellulose-based compound may be included in an amount of about 0.1 parts by weight to about 3 parts by weight based on a total weight of the negative active material.

The conductive material may be included to provide electrode conductivity, and any electrically conductive material may be used as a conductive material unless it causes a chemical change. In an implementation, the conductive material may be, e.g., a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include, e.g., copper foil, a nickel foil, a stainless steel foil, a titanium foil, a nickel foam, a copper foam, a polymer substrate coated with a conductive metal, and a combination thereof.

A rechargeable lithium battery according to one or more embodiments may include the negative electrode, a positive electrode, and an electrolyte.

The positive electrode may include a current collector and a positive active material layer formed on the current collector.

The positive active material may include lithiated intercalation compounds that reversibly intercalate and deintercalate lithium ions. In some embodiments, one or more composite oxides of a metal, e.g., cobalt, manganese, nickel, and a combination thereof, and lithium, may be used. In an implementation, the compounds represented by one of the following chemical formulae may be used. LiₐA_{1-b}X_{b}D¹₂ (0.90≤a≤1.8, 0≤b≤0.5); LiₐA_{1-b}X_{b}O_{2-c1}D¹_{c1} (0.90<a<1.8, 0≤b≤0.5, 0≤c1≤0.05); LiₐE_{1-b}X_{b}O_{2-c1}D¹_{c1} (0.90<a<1.8, 0≤b≤0.5, 0≤c1≤0.05); LiₐE_{2-b}X_{b}O_{4-c1}D¹_{c1} (0.90<a<1.8, 0≤b≤0.5, 0≤c1≤0.05); LiₐNi_{1-b-c}Co_{b}X_{c}D¹_{α} (0.90 <a<1.8, 0≤b≤0.5, 0≤c≤0.5, 0<α≤2); LiₐNi_{1-b-c}Co_{b}X_{c}O_{2-α}T_{α} (0.90<a<1.8, 0≤b≤0.5, 0≤c≤0.5, 0<α≤2); LiₐNi_{1-b-c}Co_{b}X_{c}O_{2-α}T₂ (0.90≤a≤1.8, 0≤b≤0.5, 0≤c≤0.5, 0<α≤2); LiₐNi_{1-b-c}Mn_{b}X_{c}D¹_{α} (0.90<a<1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α≤2); LiₐNi_{1-b-c}Mn_{b}X_{c}O_{2-α}T₂ (0.90≤a≤ 1.8, 0≤b≤0.5, 0≤c≤0.5, 0<α≤2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); and LiₐFePO₄ (0.90≤a≤1.8)

In the above chemical formulas, A may be, e.g., Ni, Co, Mn, or a combination thereof; X may be, e.g., Al, Ni, Co, Mn, Cr, Fe, Mg, Sr, V, a rare earth element, or a combination thereof; D¹ may be, e.g., O, F, S, P, or a combination thereof; E may be, e.g., Co, Mn, or a combination thereof; T may be, e.g., F, S, P, or a combination thereof; G may be, e.g., Al, Cr, Mn, Fe, Mg, La, Ce, Sr, V, or a combination thereof; Q may be, e.g., Ti, Mo, Mn, or a combination thereof; Z may be, e.g., from Cr, V, Fe, Sc, Y, or a combination thereof; J may be, e.g., from V, Cr, Mn, Co, Ni, Cu, or a combination thereof; L¹ may be, e.g., Mn, Al, or a combination thereof.

The compounds may have a coating layer on the surface, or may be mixed with another compound having a coating layer. The coating layer may include at least one coating element compound, e.g., an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include, e.g., Mg, Al, Co, K, Na, Ca, Si, Ti, V, Sn, Ge, Ga, B, As, Zr, or mixture thereof. The coating layer may be provided by a method having no adverse influence on properties of a positive active material by using these elements in the compound, and, e.g., the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In embodiments, the positive active material layer may further include a binder and a conductive material. The binder and the conductive material may be included in an amount of about 1 wt% to about 5 wt%, respectively based on the total weight of the positive active material layer.

The binder may improve binding properties of positive active material particles with one another and with a current collector. In an implementation, the binder may be, e.g., polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or the like.

The conductive material may be included to provide electrode conductivity, and any electrically conductive material may be used as a conductive material unless it causes a chemical change. In an implementation, the conductive material may include, e.g., a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or a mixture thereof. The current collector may include Al.

The electrolyte may include a non-aqueous organic solvent and a lithium salt. The non-aqueous organic solvent may serve as a medium for transmitting ions taking part in the electrochemical reaction of a battery. The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include methyl acetate, ethyl acetate, n-propyl acetate, dimethyl acetate, methyl propionate, ethyl propionate, propyl propionate, decanolide, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone, or the like. The alcohol-based solvent may include ethyl alcohol, isopropyl alcohol, and the like, and in an implementation, the aprotic solvent may include nitriles such as R-CN (where R may be a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. If the non-aqueous organic solvent is used in a mixture, the mixture ratio may be controlled in accordance with a desirable battery performance, and it may be well known to those skilled in the related art.

The carbonate-based solvent may include a mixture with a cyclic carbonate and a linear carbonate. The cyclic carbonate and linear carbonate may be mixed together in a volume ratio of about 1:1 to about 1:9, and if the mixture is used as an electrolyte, it may have enhanced performance.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1. The aromatic hydrocarbon-based organic solvent may be an aromatic hydrocarbon-based compound represented by Chemical Formula 1.

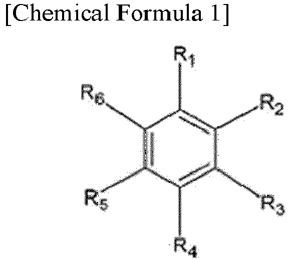

In Chemical Formula 1, R₁ to R₆ may be the same or different and may be, e.g., from hydrogen, a halogen, a C1 to C10 alkyl group, a haloalkyl group (e.g. a C1 to C10 haloalkyl group), and a combination thereof.

In an implementation, the aromatic hydrocarbon-based organic solvent may be, e.g., benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and combinations thereof.

The electrolyte may further include vinylethyl carbonate, vinylene carbonate, and/or an ethylene carbonate-based compound represented by Chemical Formula 2 as an additive for improving cycle life.

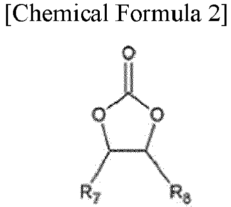

In Chemical Formula 2, R₇ and R₈ may be the same or different and may each be independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

In an implementation, the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within an appropriate range.

The lithium salt dissolved in an organic solvent may supply a battery with lithium ions, basically operate the rechargeable lithium battery, and improve transportation of the lithium ions between a positive electrode and a negative electrode. In an implementation, the lithium salt may include one or at least two supporting salts, e.g., LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y may be natural numbers, e.g., an integer of about 1 to about 20, lithium difluoro(bisoxalato) phosphate), LiCl, LiI, LiB(C₂O₄)₂ (lithium bis(oxalato) borate: LiBOB) and lithium difluoro(oxalato)borate (LiDFOB). A concentration of the lithium salt may range from about 0.1 M to about 2.0 M. If the lithium salt is included at the above concentration range, an electrolyte may have excellent performance and lithium ion mobility due to optimal electrolyte conductivity and viscosity.

A separator may be between the positive electrode and the negative electrode depending on a type of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

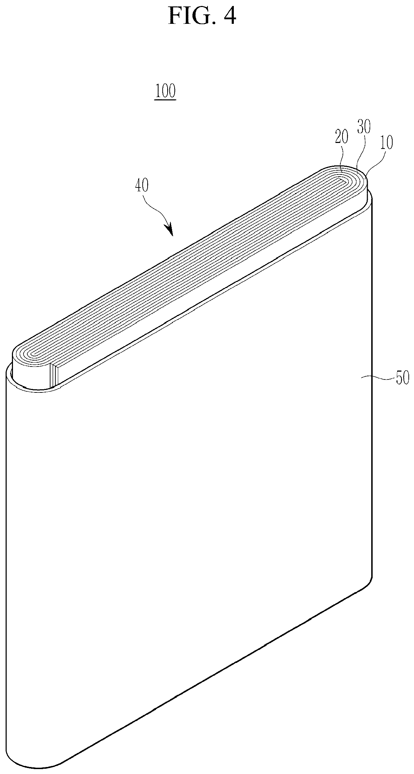

FIG. 4 is a schematic perspective view of a rechargeable lithium battery according to an embodiment. The rechargeable lithium battery according to some embodiments may include variously shaped batteries such as a cylindrical battery, a pouch battery, and the like.

Referring to FIG. 4, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte may be impregnated in the positive electrode 10, the negative electrode 20 and the separator 30.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

### (Example 1)

A water glass including 29.8 wt% of SiO₂ was diluted with water to prepare a water glass solution including 4.35 wt% of SiO₂. The components other than SiO₂ in the water glass were Na₂O, K₂O, and Fe₂O₃. Only the amount of SiO₂ was relevant so the amounts of the other components were not disclosed.

60 ml was taken from the water glass solution and used in the subsequent process.

60 ml of the water glass solution was mixed with 20 ml of 0.9 M of an aqueous solution of hydrochloric acid and agitated for 5 minutes to prepare 80 ml of silica sol. During the process, sodium components included in the water glass were removed.

80 ml of methanol corresponding to volume of the silica was agitated for 5 minutes using a homogenizer. 80 ml of the silica sol was added to the agitated product and agitated for 1 minute to help the gelation reaction to occur to prepare a wet gel. The wet gel was separated and collected, and then washed twice with water.

To the washed wet gel, a non-polar organic solvent and an organic silane compound were ad-mixed at a room temperature, 25 °C, for 3 hours to induce a solvent substitution reaction and a surface modification reaction.

As the non-polar organic solvent, a mixture of isopropyl alcohol and n-hexane (50:50 by volume ratio) was used and as the organic silane compound, trimethylchlorosilane was used.

A mixing ratio of the wet gel, the non-polar organic solvent, and the organic silane compound was a volume ratio of 1:1:0.5.

The surface of the prepared gel was modified and was primarily dried at 60 °C for 1 hour under the atmospheric pressure using a drying oven and secondarily dried at 150 °C for 1 hour to prepare a porous inorganic supporter (SiO₂). In the prepared porous inorganic supporter, an average diameter of pores was 20 nm and a pore volume was 1.5 cm³/g. A porosity was 75% and a thickness of the pore wall was 10 nm to 15 nm.

A chemical vapor deposition was conducted on the porous inorganic supporter using a SiH₄ gas at a flow rate of 0.5 L/min at 400 °C for 1 hour, thereby filling the inside of the pores of the porous inorganic supporter with Si, thereby forming a silicon layer. Si was also on the surface of the porous inorganic supporter. The SiH₄ gas was used in order to have a weight ratio of the porous inorganic supporter and Si to be 30:70.

The obtained product underwent a chemical vapor deposition using a C₂H₂ gas at a flow rate of 0.5 L/min at 700 °C to form a soft carbon coating layer on the surface of the porous inorganic supporter, thereby preparing a negative active material. The used amount of the C₂H₂ gas was adjusted in order to have a weight ratio of the porous inorganic supporter SiO₂:Si:soft carbon to be 27.5:67.5:5. The final active material included the inorganic supporter of which pores were filled with silicon, and the soft carbon coating layer coated on the silicon on the surface of the inorganic supporter and coated on the surface of the inorganic supporter, and in the active material, a weight ratio of supporter (SiO₂):Si:soft carbon was 27.5:67.5:5. The soft carbon coating layer had a thickness of 1 nm to 5 nm. An average particle diameter of the silicon included in the negative active material was 20 nm.

The negative active material was used as a first negative active material and artificial graphite was used as a second negative active material.

97.5 wt% of a mixed negative active material of the first negative active material and the second negative active material (20:80 by weight ratio), 1.5 wt% of a styrene butadiene rubber binder, and 1.0 wt% of a carboxymethyl cellulose thickener were dissolved in a water solvent to prepare a negative active material slurry.

The negative active material slurry was coated on a Cu foil current collector, dried and pressurized under a general procedure to prepare a negative electrode including the current collector and a negative active material layer formed on the current collector.

96 wt% of a LiNi_{0.8}Co_{0.1}Al_{0.1}O₂ positive active material, 2 wt% of a polyvinylidene fluoride binder, and 2 wt% of a ketjen black conductive material were mixed in an N-methyl pyrrolidone solvent to prepare a positive active material slurry.

The positive active material slurry was coated on an Al foil current collector, dried, and pressurized under a general procedure to prepare a positive electrode including the current collector and a positive active material layer formed on the current collector.

Using the negative electrode, the positive electrode, and an electrolyte, a coin-type full cell with 500 mAh/g was fabricated. The electrolyte was used a 1.5 M LiPF₆ dissolved in a mixed solvent of ethylene carbonate, ethylmethyl carbonate and dimethyl carbonate (20:10:70 volume ratio).

### (Example 2)

A porous inorganic supporter was prepared by the same procedure as in Example 1, except 20 ml of 0.8 M of an aqueous solution of hydrochloric acid was used instead of 20 ml of 0.9 M of an aqueous solution of hydrochloric acid. In the prepared porous inorganic supporter, an average diameter of pores was 15 nm and a pore volume was 0.6 cm³/g. A porosity was 56% and a thickness of the pore wall was 15 nm to 20 nm.

A negative active material was prepared by the same procedure as in Example 1, except that the porous inorganic supporter was used, the used amount of the SiH₄ gas was used at a flow rate of 0.4 L/min in order to have a weight ratio of the porous inorganic supporter and Si to be 50:50, and the used amount of the C₂H₂ gas was used at a flow rate of 0.5 L/min in order to have a weight ratio of the porous inorganic supporter SiO₂:Si: soft carbon to be 47.5:47.5:5. The final active material included the inorganic supporter of which pores were filled with silicon, and the soft carbon coating layer coated on the silicon on the surface of the supporter and coated on the surface of the supporter, and in the active material, a weight ratio of supporter (SiO₂):Si: soft carbon was 47.5:47.5:5, and the soft carbon coating layer had a thickness of 1 nm to 5 nm. An average particle diameter of the silicon included in the negative active material was 15 nm.

Using the negative active material, a negative electrode was prepared by the same procedure as in Example 1. The negative electrode, the positive electrode of Example 1, and the electrolyte of Example 1 were used to fabricate a coin-type full cell.

### (Example 3)

A porous inorganic supporter was prepared by the same procedure as in Example 1, except 20 ml of 0.6 M of an aqueous solution of hydrochloric acid was used instead of 20 ml of 0.9 M of an aqueous solution of hydrochloric acid. In the prepared porous inorganic supporter, an average diameter of pores was 12 nm and a pore volume was 0.3 cm³/g. A porosity was 38% and a thickness of the pore wall was 20 nm to 25 nm.

A negative active material was prepared by the same procedure as in Example 1, except that the porous inorganic supporter was used, the used amount of the SiH₄ gas was used at a flow rate of 0.3 L/min in order to have a weight ratio of the porous inorganic supporter and Si to be 70:30, and the used amount of the C₂H₂ gas was used at a flow rate of 0.5 L/min in order to have a weight ratio of the porous inorganic supporter SiO_{2:}Si: soft carbon to be 67.5:27.5:5. The final active material included the inorganic supporter of which pores was filled with silicon, and the soft carbon coating layer coated on the silicon on the surface of the inorganic supporter and coated on the surface of the inorganic supporter, and in the active material, a weight ratio of supporter (SiO₂):Si:soft carbon was 67.5:27.5:5.5, and the soft carbon coating layer had a thickness of 1 nm to 5 nm. An average particle diameter of the silicon included in the negative active material was 12 nm.

Using the negative active material, a negative electrode was prepared by the same procedure as in Example 1. The negative electrode, the positive electrode of Example 1, and the electrolyte of Example 1 were used to fabricate a coin-type full cell.

### (Example 4)

A fumed SiO₂ (average particle diameter: 50 nm), water, and polyvinylpyrrolidone were mixed and dispersed. A mixing ratio of the fumed SiO₂, polyvinylpyrrolidone, and water were a weight ratio of 11:1:88.

The obtained dispersed liquid was spray-dried at 180 °C to prepare a porous SiO₂ cluster having an average particle diameter, D50 of 8 µm and a BET specific surface area of 100 m²/g.

The porous SiO₂ cluster was heat-treated at 900 °C under an N₂ atmosphere for 2 hours to prepare a porous inorganic supporter having pores. In the porous inorganic supporter, an average diameter of the pores was 15 nm and a pore volume was 0.5 cm³/g. The porosity was 51% and a thickness of a pore wall was 30 nm to 50 nm.

A chemical vapor deposition using a SiH₄ gas at a flow rate of 0.5 L/min was carried out for the porous inorganic supporter at 400 °C to fill inside of the pores of the porous inorganic supporter. The SiH₄ gas was used in order to have a weight ratio of the porous inorganic supporter and Si to be 50:50.

A chemical vapor deposition using a C₂H₂ gas at a flow rate of 0.5 L/min was carried out for the resulting product at 700 °C to form a soft carbon coating layer on the surface of the inorganic supporter, thereby preparing a negative active material. The C₂H₂ gas was used in order to have a weight ratio of SiO₂:Si:soft carbon to be 47.5:47.5:5. The prepared final negative active material included the inorganic supporter of which pores were filled with silicon, and the soft carbon coating layer coated on the silicon on the surface of the inorganic supporter and coated on the surface of the inorganic supporter, and in the active material, a weight ratio of supporter (SiO₂):Si:soft carbon was 47.5:47.5:5. The soft carbon coating layer had a thickness of 1 nm to 5 nm. An average particle diameter of the silicon included in the negative active material was 15 nm.

Using the negative active material, a negative electrode was fabricated by the same procedure as in Example 1. The negative electrode, the positive electrode of Example 1, and the electrolyte of Example 1 were used to fabricate a coin-type half-cell.

### (Comparative Example 1)

A negative active material was prepared by the same procedure as in Example 1, except that a SiH₄ gas at a flow rate of 0.2 L/min and a C₂H₂ gas at a flow rate of 0.5 L/min were used on the porous inorganic supporter according to Example 1.

The prepared final active material included a porous inorganic supporter of which some pores were filled with silicon, the pores had an average diameter of 7 nm, and had a volume of pore which was not filled with silicon was 0.1 cm³/g in the porous inorganic supporter. In final active material, porosity was 17%.

In the final active material, a negative active material with a weight ratio of SiO₂:Si:soft carbon of 67.5:27.5:5 was prepared. The soft carbon coating layer had a thickness of 1 nm to 5 nm. An average particle diameter of the silicon included in the negative active material was 10 nm.

Using the negative active material, a negative electrode was fabricated by the same procedure as in Example 1. The negative electrode, the positive electrode of Example 1, and the electrolyte of Example 1 were used to fabricate a coin-type half-cell.

### (Comparative Example 2)

Si with a particle diameter of 30 nm to 50 nm was prepared by a PECVD (Plasma-enhanced chemical vapor deposition) and a chemical vapor deposition was conducted thereon by using a C₂H₂ gas at a flow rate of 0.5 L/min by the same procedure as in Example 1, to prepare a negative active material of which the surface was formed with the soft carbon coating layer.

Using the negative active material, a negative electrode was fabricated by the same procedure as in Example 1. The negative electrode, the positive electrode of Example 1, and the electrolyte of Example 1 were used to fabricate a coin-type half-cell.

### Experimental Example 1) Evaluation of full width at a half maximum

The X-ray diffraction for silicon in the negative active materials according to Examples 1 to 4 and Comparative Examples 1 and 2 was carried out by using a CuKα to measure a full width at a half maximum, FWHM (111) at a (111) plane.

The X-ray diffraction analysis was measured under a condition of a scan speed (°/S) of 0.054, a step size (°/step) of 0.01313, and time per step of 62.475s in a range of 2θ= 10° to 80°.

The measured results are shown in Table 1.

### Experimental Example 2) Evaluation of capacity

Specific capacities of the cells according to Examples 1 to 4 and Comparative Examples 1 and 2 were measured. The results are shown in Table 1.

### Experimental Example 3) Evaluation of efficiency

The cells according to Examples 1 to 4 and Comparative Examples 1 and 2 were charged and discharged at 0.1C once. A ratio of the discharge capacity relative to the charge capacity was calculated. The results are shown in Table 1, as an efficiency.

### Experimental Example 4) Evaluation of cycle-life characteristics

The cells according to Examples 1 to 4 and Comparative Examples 1 to 2 were charged at 1C and discharged at 1C. A ratio of discharge capacity at each cycle relative to discharge capacity at first was calculated. The number of cycles until the ratio of capacity, that is, a capacity retention reached to 80% are shown in Table 1.

**(Table 1)**

| | FWHM (111, degrees (°)) | Specific capacity (mAg) | Efficiency (%) | Number of cycle (No.) |
|---|---|---|---|---|
| Example 1 | 2 | 2060 | 90 | 640 |
| Example 2 | 2 | 1800 | 89 | 700 |
| Example 3 | 2 | 1210 | 87 | 620 |
| Example 4 | 2 | 1580 | 88 | 680 |
| Comparative Example 1 | 2 | 1210 | 85 | 200 |
| Comparative Example 2 | 0.3 | 2540 | 84 | 110 |

As shown in Table 1, the cells of Examples 1 to 4 exhibited high capacity, and/or excellent efficiency characteristic and cycle-life characteristic. Whereas, Comparative Example 1 exhibited low efficiency and cycle-life characteristic and Comparative Example 2 exhibited high capacity and slightly low efficiency.

The cells of Example 1 to 4 maintained capacity retention of 80%, even after conducting charge and the discharge 620 cycles to 700 cycles, thus demonstrating surprised excellent cycle-life characteristics. Whereas, the cells of Comparative Examples 1 and 2 exhibited the decreased capacity retention to 80% at 110^{th} to 200^{th} charge and discharge, indicating deteriorated cycle-life characteristics.

By way of summation and review, one or more embodiments provides a negative active material exhibiting improved cycle-life characteristics. Another embodiment provides a rechargeable lithium battery including the negative active material. A negative active material according to one or more embodiments may exhibit excellent cycle-life characteristics.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A negative active material, comprising:
an inorganic supporter having pores which are filled with silicon;
silicon located on a surface of the inorganic supporter; and
a carbon coating layer on the surface of the inorganic supporter and a surface of the silicon located on the surface of the inorganic supporter.

2. The negative active material as claimed in claim 1, wherein the inorganic supporter comprises Al₂O₃, ZrO₂, SiO₂, TiO₂, SiC, or a combination thereof.

3. The negative active material as claimed in claim 1 or claim 2, wherein the carbon coating layer comprises amorphous carbon, crystalline carbon, or a combination thereof.

4. The negative active material as claimed in claim 1 or claim 2, wherein the carbon coating layer comprises amorphous carbon.

5. The negative active material as claimed in any one of claims 1 to 4, wherein an interior wall of each of the pores is coated with a carbon-based material.

6. The negative active material as claimed in claim 5, wherein the carbon-based material comprises crystalline carbon, amorphous carbon, or a combination thereof.

7. The negative active material as claimed in any one of claims 1 to 6, wherein the silicon has a full width at half maximum (FWHM) of about 0.5° to about 10°.

8. The negative active material as claimed in any one of claims 1 to 7, wherein the silicon has a particle diameter of about 5 nm to about 100 nm.

9. The negative active material as claimed in any one of claims 1 to 8, wherein an amount of the carbon coating layer is about 1 wt% to about 30 wt% based on a total weight of the negative active material.

10. The negative active material as claimed in any one of claims 1 to 9, wherein a total amount of the silicon is about 20 wt% to about 70 wt% based on a total weight of the negative active material.

11. The negative active material as claimed in any one of claims 1 to 10, wherein an amount of the inorganic supporter is about 5 wt% to about 70 wt% based on a total weight of the negative active material.

12. The negative active material as claimed in any one of claims 1 to 11, wherein the carbon coating layer has a thickness of about 1 nm to about 50 nm.

13. The negative active material as claimed in any one of claims 1 to 12, wherein:
(i) each of the pores in the inorganic supporter has a diameter of about 1 nm to about 100 nm; and/or
(ii) each of the pores has a wall thickness of about 5 nm to about 150 nm.

14. The negative active material as claimed in any one of claims 1 to 13, wherein the inorganic supporter in which the pores are filled with the silicon has a porosity of about 10% to about 90%, optionally wherein the inorganic supporter has a pore volume of about 0.3 cm³/g to about 4.5 cm³/g.

15. A rechargeable lithium battery, comprising:
a negative electrode comprising the negative active material of any one of claim 1 to claim 14;
a positive electrode; and
an electrolyte.
